# EUROPÄISCHE PATENTSCHRIFT

(11) **EP 1 480 783 B1**
(45) Veröffentlichungstag und Bekanntmachung des Hinweises auf die Patenterteilung: **09.04.2008**
(21) Anmeldenummer: 03717199.8
(22) Anmeldetag: 27.02.2003
(51) Int. Cl.: B23Q 11/10, B23Q 1/00, B23Q 11/00

(54) **WERKZEUGMASCHINE SOWIE WERKZEUGHALTER FÜR EINE SOLCHE**
MACHINE TOOL AND TOOLHOLDER FOR SAME
MACHINE-OUTIL ET PORTE-OUTIL POUR UNE TELLE MACHINE

(30) Priorität: 04.03.2002 DE 10210906
(43) Veröffentlichungstag der Anmeldung: 01.12.2004
(73) Patentinhaber: Chiron-Werke GmbH & Co. KG, 78532 Tuttlingen (DE)
(72) Erfinder: SCHWEIZER, Anton, 78573 Wurmlingen (DE); PRUST, Dirk, 78532 Tuttlingen (DE)
(74) Vertreter: Otten, Hajo
(86) Internationale Anmeldenummer: PCT/EP2003/002023
(87) Internationale Veröffentlichungsnummer: WO 2003/074226

(56) Entgegenhaltungen:
- DE-A- 3 319 618
- DE-A- 4 200 808
- DE-A- 19 726 942
- DE-U- 8 430 433

## Beschreibung

Die vorliegende Erfindung betrifft eine Werkzeugmaschine mit einer Spindel, die eine Werkzeugaufnahme für einen wechselbaren Werkzeughalter aufweist, der im Betrieb der Werkzeugmaschine in die Werkzeugaufnahme eingespannt ist und der zum Aufnehmen eines Kühl-Schmiermittels ein Kühlmittelröhrchen aufweist, ferner mit einem im Inneren der Spindel angeordneten ersten Kanal mit einer Ausgangsöffnung, die innerhalb der Werkzeugaufnahme mündet, wobei das Kühlmittelröhrchen bei eingespanntem Werkzeughalter in die Ausgangsöffnung des ersten Kanals eingreift.

Die Erfindung betrifft des weiteren eine derartige Werkzeugmaschine mit einem Werkzeughalter.

Eine derartige Werkzeugmaschine sowie ein entsprechender Werkzeughalter sind beispielsweise aus der DE 33 19 618 A1 bekannt.

Eine aus der DE 197 26 942 A1 bekannte Werkzeugmaschine weist eine in einem Spindelgehäuse drehbar gelagerte Spindel auf, an deren Stirnseite zentrisch eine Aufnahme für den Werkzeughalter vorgesehen ist. Die Werkzeughalter sind in der Regel genormt. Eine zunehmende Verbreitung finden sogenannte HSK-Werkzeughalter, die zum Einspannen in der Werkzeugaufnahme einen Hohlschaftkegel aufweisen. Die Werkzeugaufnahme besitzt in diesem Fall ein Spannsystem mit Spannzangen, die in das Innere des Hohlschaftkegels eingreifen, um den Werkzeughalter drehfest einzuspannen. Die Spannzangen werden üblicherweise über einen Spannzapfen betätigt, der am Ende einer axial in der Spindel angeordneten Spannstange vorgesehen ist.

Bei der bekannten Werkzeugmaschine verläuft ein Innenkanal in Axialrichtung durch die Spindel. Der Innenkanal mündet mit einer Ausgangsöffnung zentrisch am Grund der Werkzeugaufnahme, wobei das untere Ende des Innenkanals von einer Bohrung gebildet wird, die die Spannstange durchsetzt. In die derart gebildete Ausgangsöffnung greift ein Kühlmittelröhrchen des eingespannten Werkzeughalters. Auf diese Weise wird ein durchgehender Kanal geschaffen, durch den ein Kühl-Schmiermittel von einer Kühlmittelquelle über die Spindel und den Werkzeughalter zu dem Werkzeug geleitet werden kann. Als Kühl-Schmiermittel wird bei der bekannten Werkzeugmaschine in der Regel eine Öl-Wasser-Emulsion (KSS) verwendet.

Ein besonderer Aspekt bei der bekannten Werkzeugmaschine ist, daß das Kühl-Schmiermittel nicht nur zum Kühlen und Schmieren des Werkzeugs beim Bearbeiten eines Werkstücks dient. Bei einem Werkzeugwechsel, bei dem in der Regel der gesamte Werkzeughalter mit dem Werkzeug ausgetauscht wird, dient das Kühl-Schmiermittel hier nämlich auch dazu, den Werkzeughalter, insbesondere dessen äußere Kegel- und Planflächen, von Spänen und etwaigen anderen Schmutzpartikeln zu säubern. Hierzu wird der Werkzeughalter zumindest beim Heranführen an die Werkzeugaufnahme mit dem Kühl-Schmiermittel abgespült.

Die bekannte Werkzeugmaschine kommt daher mit einem einzigen Innenkanal aus, der sowohl zum Kühlen und Schmieren des Werkzeugs als auch zum Reinigen des Werkzeughalters dient. Dies ermöglicht eine besonders einfache und damit kostengünstige Konstruktion.

Neben der Verwendung einer Kühlflüssigkeit zum Kühlen und Schmieren eines Werkzeugs ist es grundsätzlich auch bekannt, eine sogenannte Minimalmengenschmierung zu verwenden. Hierbei kommt anstelle der Kühlflüssigkeit ein Aerosol, bevorzugt in Form einer Öl-Luft-Mischung, zur Verwendung. Wie der Name schon sagt, ist die Menge an benötigtem Kühl-Schmiermittel bei der Minimalmengenschmierung erheblich geringer als bei der Verwendung einer Kühlflüssigkeit.

Es besteht nun der Wunsch, eine Werkzeugmaschine der zuvor beschriebenen Art mit möglichst einfachen Mitteln auch mit einer Minimalmengenschmierung zu betreiben.

Prinzipiell ist es aus der DE 198 15 134 A1 bereits bekannt, eine Werkzeugmaschine mit Minimalmengenschmierung zu betreiben, wofür in der Spindel ein Innenrohr zur Führung von Öl und ein dieses umgebender Ringkanal zur Führung von Druckluft vorgesehen ist. Das Innenrohr mündet in eine Mischkammer, die in dem oberen Teil eines Werkzeughalters vorgesehen ist, wobei die Druckluft ebenfalls in diese Mischkammer geführt wird. Die Aerosolerzeugung erfolgt auf diese Weise erst an der Werkzeugaufnahme bzw. in dem Werkzeug selbst.

Alternativ wird in dieser Druckschrift vorgeschlagen, auf das Innenrohr zu verzichten und das Aerosol unmittelbar durch den die Spindel durchsetzenden Kanal bis in den Mischraum zu leiten.

Bei der praktischen Realisierung hat sich jedoch gezeigt, daß es in diesem Fall schwierig ist, einen kontinuierlichen und gleichmäßigen Strom des Kühl-Schmiermittels zu gewährleisten. Nähere Untersuchungen haben gezeigt, daß eine Ursache hierfür Hohlräume, Kanten und andere Unregelmäßigkeiten sind, die der Innenkanal der bekannten Werkzeugmaschine insbesondere in Übergangs- und Kupplungsbereichen aufweist. Das Öl aus dem Aerosol sammelt sich bei hohen Drehzahlen der Spindel an derartigen Stellen und versackt. Wird die Drehzahl der Spindel geringer oder die Spindel beispielsweise für einen Werkzeugwechsel abgebremst, fließt das Öl aus den Versackungsstellen ab, was an der Ausgangsöffnung des Innenkanals zu einer erhöhten Menge an Öl führt. Wird die Spindel anschließend wieder auf hohe Drehzahlen beschleunigt, sammelt sich zunächst ein Teil des zugeführten Öls im Aerosol an den Versackungsstellen. Infolgedessen kann die an der Ausgangsöffnung des Innenkanals zur Verfügung stehende Menge an Öl nach einem Werkzeugwechsel zunächst zu gering sein. Unter ungünstigen Bedingungen besteht die Gefahr, daß das Werkzeug und/oder das bearbeitete Werkstück hierdurch beschädigt werden.

Aus der DE 84 30 433 U1 ist eine Werkzeugmaschine bekannt, die ein zweikanaliges System aufweist. Zum Kühlen des Werkzeugs beim Bearbeiten eines Werkstücks wird über einen axial angeordneten ersten Innenkanal ein Kühl-Schmiermittel zugeführt. Der Innenkanal für das Kühl-Schmiermittel mündet bei dieser bekannten Werkzeugmaschine allerdings außerhalb des Aufnahmeraums für den Werkzeughalter. Zum Reinigen des Werkzeughalters bei einem Werkzeugwechsel ist bei dieser bekannten Werkzeugmaschine ein zweiter Innenkanal vorgesehen, über den beim Werkzeugwechsel Druckluft zugeführt wird. Der zweite Innenkanal mündet zentrisch am Grund des Aufnahmeraums für den Werkzeughalter.

Die Werkzeughalter dieser bekannten Werkzeugmaschine besitzen kein Kühlmittelröhrchen der vorstehend beschriebenen Art, über das ein Kühl-Schmiermittel zu dem Werkzeug geführt wird. Im Gegenteil, die Druckschrift legt Wert darauf, daß gerade kein Kühl-Schmiermittel in den Bereich der Werkzeugaufnahme gelangt. Zudem ist diese bekannte Werkzeugmaschine auch nicht für eine Minimalmengenschmierung vorgesehen.

Vor diesem Hintergrund ist es eine Aufgabe der vorliegenden Erfindung, eine Werkzeugmaschine der eingangs beschriebenen Art auf einfache Weise für Minimalmengenschmierung auszurüsten, wobei ein kontinuierlicher, gleichmäßiger Aerosolstrom gewährleistet ist.

Diese Aufgabe wird bei der eingangs genannten Werkzeugmaschine dadurch gelöst, daß der erste Kanal ein durchgehendes Innenrohr beinhaltet, dessen erstes Ende mit einer Aerosolquelle verbunden ist und dessen zweites Ende zum paßgenauen Anschluß an das Kühlmittelröhrchen ausgebildet ist.

Ein solches Innenrohr kann bei der eingangs beschriebenen Werkzeugmaschine auf einfache Weise durch den dort vorhandenen Innenkanal hindurchgesteckt werden. Der konstruktive Aufwand beim Umrüsten der bekannten Werkzeugmaschine auf eine Minimalmengenschmierung ist daher sehr gering. Gleichermaßen kann beim Bau einer neuen Werkzeugmaschine auf das bestehende Konzept der bekannten Werkzeugmaschine zurückgegriffen werden. Damit kann sehr einfach und trotzdem individuell auf Kundenwünsche hinsichtlich einer konventionellen Kühlung oder einer Minimalmengenschmierung eingegangen werden. Das durchgehende Innenrohr läßt sich ohne größere Fertigungsschwierigkeiten mit einer durchgehend glatten Innenfläche herstellen, so daß Versackungsstellen für das Aerosol weitgehend vermieden sind. Selbst Kupplungsbereiche innerhalb der Spindel werden damit "glatt" überbrückt. Insgesamt wird so auf einfache Weise ein gleichmäßiger und kontinuierlicher Aerosolstrom erreicht.

Im Vergleich zu der eingangs beschriebenen, bekannten Werkzeugmaschine wird der lichte Durchmesser des Innenkanals durch das zusätzlich verwendete Innenrohr natürlich verringert. Infolgedessen steht bei der neuen Werkzeugmaschine nur ein verringerter Querschnitt für die Zuführung des Aerosols zur Verfügung. Überraschenderweise hat sich jedoch gezeigt, daß der verringerte Querschnitt bei Minimalmengenschmierung ausreichend ist, um die erforderliche Menge an Aerosol zu transportieren. Im Gegenteil, der verringerte Querschnitt besitzt sogar den Vorteil, daß das Aerosol selbst bei hohen Drehzahlen nicht so weit nach außen getrieben wird. Das Aerosol verteilt sich daher auch bei hohen Drehzahlen über einen geringeren Radius, was den gewünschten kontinuierlichen Aerosolstrom nochmals begünstigt. Darüber hinaus besitzt das Innenrohr aufgrund des geringeren Innendurchmessers auch eine geringere Innenfläche, an der Aerosol anhaften kann. Auch hierdurch wird ein anfänglicher "Schwund" an Aerosol in der Maschine verringert und somit der gewünschte kontinuierliche Strom erreicht.

Die erfindungsgemäße Lösung besitzt zudem den Vorteil, daß eine für Minimalmengenschmierung ausgerüstete Werkzeugmaschine auf einfache Weise auch wieder auf eine konventionelle Kühlung mit Kühlflüssigkeit umgerüstet werden kann. Hierzu ist es im wesentlichen nur erforderlich, das in den Innenkanal eingesteckte Innenrohr zu entfernen sowie eine andere Kühlmittelquelle anzuschließen. Der Kunde der erfindungsgemäßen Werkzeugmaschine erhält damit eine größere Flexibilität als bisher.

Die genannte Aufgabe ist daher vollständig gelöst.

In einer Ausgestaltung der Erfindung greift das Innenrohr im eingespannten Zustand des Werkzeughalters in eine Eingangsöffnung des Kühlmittelröhrchens ein.

In dieser Ausgestaltung wird eine zweifache, gewissermaßen gegenseitig verzahnte Verbindung zwischen dem Kühlmittelröhrchen und dem in der Spindel verlaufenden ersten Kanal geschaffen. Einerseits greift das Kühlmittelröhrchen in die Ausgangsöffnung des ersten Kanals. Andererseits greift das Innenrohr in die Eingangsöffnung des Kühlmittelröhrchens, wobei das Innenrohr bevorzugt in dem ersten Kanal befestigt ist. Dieses wechselseitige Eingreifen führt zu einer sehr stabilen und paßgenauen Verbindung. Des weiteren wird das paßgenaue Einführen des Werkzeughalters in die Werkzeugaufnahme und die Abdichtung des sich insgesamt von der Spindel bis zum Werkzeug erstreckenden Kühlmittelkanals erleichtert.

In einer weiteren Ausgestaltung ist das Kühlmittelröhrchen in dem ersten Kanal über eine erste Ringdichtung abgedichtet. Bevorzugt umgibt die erste Ringdichtung das Kühlmittelröhrchen an seiner Außenseite.

Durch diese Maßnahme wird vor allem die Kompatibilität der neuen Anordnung mit der bekannten, eingangs beschriebenen Werkzeugmaschine gefördert. Infolgedessen vereinfacht sich der Aufwand beim Umrüsten von einer konventionellen Kühlung mit Kühlflüssigkeit auf eine Minimalmengenschmierung bzw. umgekehrt nochmals. Außerdem können bereits vorhandene Werkzeughalter auf diese Weise auch einfach und kostengünstig für eine Verwendung in der neuen Werkzeugmaschine umgerüstet werden. Durch die Kompatibilität ergeben sich zudem Kosteneinsparungen bei der Herstellung von neuen Werkzeugmaschinen mit Minimalmengenschmierung.

Ein weiterer Vorteil ergibt sich vor allem dann, wenn diese Maßnahme damit kombiniert wird, daß das Innenrohr in die Eingangsöffnung des Kühlmittelröhrchens eingreift. In diesem Fall findet die primäre Abdichtung nämlich im Bereich der Eingangsöffnung des Kühlmittelröhrchens statt. Die an der Außenseite des Kühlmittelröhrchens anliegende erste Ringdichtung stellt damit eine Redundanz dar, die zu einem besonders dichten Abschluß des Kühlmittelsystems führt.

In einer weiteren Ausgestaltung ist das Innenrohr mit dem Kühlmittelröhrchen über eine zweite Ringdichtung verbunden. Bevorzugt ist die zweite Ringdichtung im Inneren des Kühlmittelröhrchens angeordnet.

Durch diese Weiterbildung wird eine besonders gute Abdichtung zwischen dem Innenrohr und dem Kühlmittelröhrchen erreicht. Die Anordnung der zweiten Ringdichtung im Inneren des Kühlmittelröhrchens erleichtert zudem das Einführen des Werkzeughalters in die Werkzeugaufnahme.

In einer weiteren Ausgestaltung weist das Kühlmittelröhrchen einen rohrförmigen Inneneinsatz auf, mit dessen Hilfe die zweite Ringdichtung fixiert ist.

Diese Weiterbildung ermöglicht eine einfache Aus- bzw. Umrüstung von Werkzeughaltern der eingangs beschriebenen Art auf die vorliegende Anordnung. Das Kühlmittelröhrchen bekannter Werkzeughalter wird hiernach nämlich einfach um den rohrförmigen Inneneinsatz ergänzt. Dies erlaubt es ferner, das Kühlmittelröhrchen in gewohnter Form und damit kostengünstig herzustellen. Erst durch den rohrförmigen Inneneinsatz, der separat eingesetzt werden kann, wird das Kühlmittelröhrchen für die Minimalmengenschmierung optimiert.

In einer weiteren Ausgestaltung besitzt die Spindel eine mit einer Innenbohrung versehene Spannstange zum Festspannen des Werkzeughalters, wobei die Innenbohrung der Spannstange die Ausgangsöffnung des ersten Kanals bildet.

Durch diese Weiterbildung wird die Kompatibilität der neuen Anordnung mit der eingangs beschriebenen, bekannten Werkzeugmaschine weiter verbessert. Infolgedessen lassen sich die Produktions- bzw. Umrüstkosten weiter reduzieren.

In einer weiteren Ausgestaltung weist die Spindel ferner zumindest einen zweiten Kanal auf, der mit einer Quelle für ein Säuberungsmittel, insbesondere mit einer Druckluftquelle, verbunden ist.

In dieser Ausgestaltung besitzt die erfindungsgemäße Werkzeugmaschine ein zweikanaliges System, bei dem das Aerosol und das Säuberungsmittel getrennt voneinander geführt sind. Diese Weiterbildung verläßt das bisherige einkanalige Konzept, das bei der eingangs beschriebenen Werkzeugmaschine verfolgt wurde. Durch diese Maßnahme wird die Kontinuität des Aerosolstroms weiter verbessert, da während des Werkzeugwechsels kein Aerosol aus dem System ausgeblasen wird. Infolgedessen steht bereits zu Beginn der erneuten Bearbeitung nach einem Werkzeugwechsel die volle gewünschte Menge an Aerosol zur Verfügung.

In einer weiteren Ausgestaltung weist das Innenrohr zumindest streckenweise einen Außendurchmesser auf, der um so viel kleiner ist als ein lichter Innendurchmesser des ersten Kanals, daß um das Innenrohr ein lichter Zwischenraum verbleibt.

Diese Weiterbildung ermöglicht eine einfache und damit kostengünstige Realisierung des zuvor genannten zweiten Kanals. Als zweiter Kanal kann in dieser Weiterbildung nämlich der genannte lichte Zwischenraum genutzt werden. Entfernt man das Innenrohr, kehrt man automatisch zu dem einkanaligen Konzept der eingangs beschriebenen Werkzeugmaschine und den damit verbundenen Vorteilen zurück. Andererseits ergibt sich durch Einsetzen des Innenrohrs automatisch die Trennung der Kanäle für das Aerosol einerseits und das Säuberungsmittel andererseits. Diese Weiterbildung senkt daher den Aufwand bei einem Wechsel von Minimalmengenschmierung zu konventioneller Kühlflüssigkeit und umgekehrt nochmals.

In einer weiteren Ausgestaltung zweigt im Bereich des lichten Zwischenraums zumindest ein Seitenkanal mit einer Auslaßöffnung ab, die an einem an der Stirnfläche der Spindel angeordneten Abschnitt mündet. Bevorzugt liegt die Auslaßöffnung an einem Abschnitt der Spindel, an dem der Werkzeughalter in eingespanntem Zustand mit einer Planfläche anliegt.

Ein derartiger Seitenkanal verbessert die Kompatibilität der neuen Werkzeugmaschine mit der bekannten Werkzeugmaschine noch weiter. Bei der bekannten Werkzeugmaschine, die ein einkanaliges Spül- und Kühlsystem aufweist, bildet der Seitenkanal einen Bypass, durch den die Reinigungswirkung beim Abspülen eines eingewechselten Werkzeughalters erheblich verbessert wird. Infolgedessen wird auch die Paß- und Zentriergenauigkeit des Werkzeughalters in der Werkzeugaufnahme erhöht. In der hier vorgeschlagenen Anordnung, die zu einem zweikanaligen System führt, übernimmt der Seitenkanal demgegenüber automatisch und ohne zusätzliche konstruktive Änderungen die Funktion, das Säuberungsmittel zu dem Werkzeughalter zu führen. Infolgedessen trägt diese Weiterbildung ebenfalls zu einer Kostenreduzierung bei.

Die Anordnung der Auslaßöffnung des Seitenkanals an einem Spindelabschnitt, an der im eingespannten Zustand die Planfläche des Werkzeughalters anliegt, führt darüber hinaus zu einer besonders effektiven Reinigung des Werkzeughalters und infolgedessen zu einer besonders hohen Paß- und Zentriergenauigkeit.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte Darstellung der neuen Werkzeugmaschine in einer teilweise geschnittenen Ansicht,
- Fig. 2: einen Werkzeughalter für die Werkzeugmaschine aus Fig. 1 in einer teilweise geschnittenen Ansicht,
- Fig. 3: den Anschluß des Kühlmittelröhrchens des Werkzeughalters aus Fig. 2 an das Innenrohr der Werkzeugmaschine aus Fig. 1, und
- Fig. 4: eine teilweise schematisierte Darstellung der neuen Werkzeugmaschine mit weiteren Details.

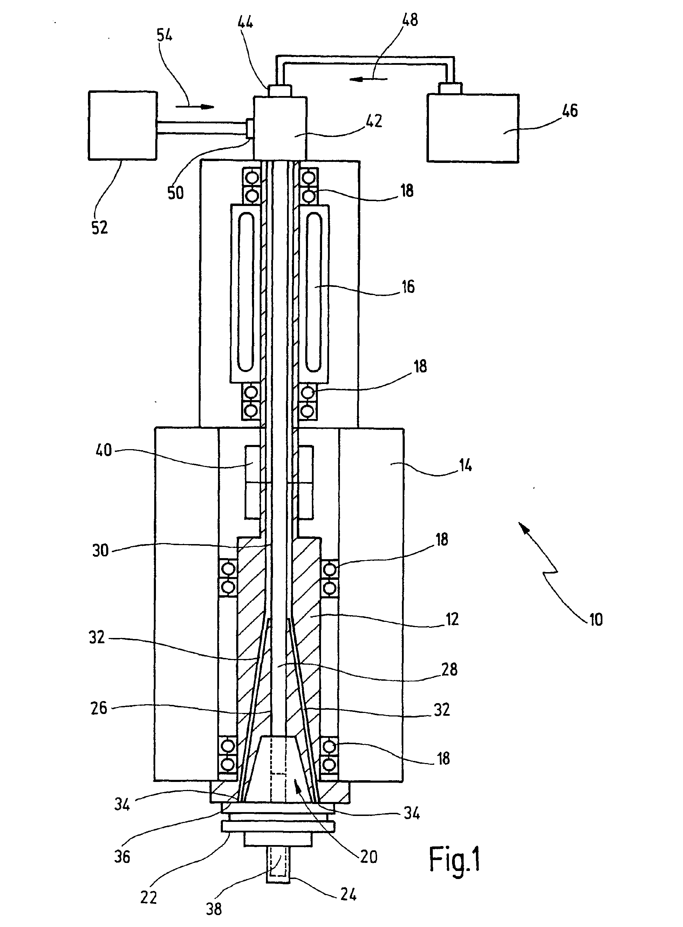

In Fig. 1 ist eine neue Werkzeugmaschine gemäß der vorliegenden Erfindung in ihrer Gesamtheit mit der Bezugsziffer 10 bezeichnet. Der Einfachheit halber ist hier im wesentlichen nur der Spindelstock der Werkzeugmaschine 10 dargestellt. Weitere Elemente, wie beispielsweise ein Drehtisch oder eine Werkstückzuführung, sind an sich bekannt und aus Gründen der Übersichtlichkeit hier nicht gezeigt.

Die Werkzeugmaschine 10 besitzt eine Spindel 12, die in an sich bekannter Weise in einem Spindelgehäuse 14 gelagert ist. Mit der Bezugsziffer 16 ist ein Spindelmotor bezeichnet, der die Spindel 12 antreibt. Mit der Bezugsziffer 18 sind Radiallager bezeichnet, mit denen der Spindelmotor 16 und die Spindel 12 in üblicher Weise abgestützt sind.

Die Spindel 12 besitzt an ihrem in der Darstellung in Fig. 1 unteren Ende eine Werkzeugaufnahme 20. Hierbei handelt es sich um eine Aufnahme für Werkzeughalter mit einem sogenannten Hohlschaftkegel (HSK-Werkzeughalter). Der Werkzeughalter selbst ist in der Darstellung in Fig. 1 mit der Bezugsziffer 22 bezeichnet, und an seinem unteren Ende ist in an sich bekannter Weise ein Werkzeug 24 befestigt.

Mit der Bezugsziffer 26 ist ein erster Kanal bezeichnet, der sich axial durch die gesamte Spindel 12 sowie den darüber angeordneten Spindelmotor 16 erstreckt. In den ersten Kanal 26 ist ein Innenrohr 28 eingesteckt, das sich durchgehend über die gesamte Länge der Spindel und des Spindelmotors erstreckt. Im oberen Bereich der Spindel 12 sowie im Bereich des Spindelmotors 16 ist der Außendurchmesser des Innenrohrs 28 um so viel kleiner als der lichte Innendurchmesser des ersten Kanals 26, daß ein lichter Zwischenraum 30 verbleibt. Dieser bildet einen zweiten Kanal zum Zuführen eines Säuberungsmittels. Der zweite Kanal 30 umgibt das Innenrohr 28 hier dementsprechend konzentrisch.

Im unteren Bereich der Spindel 12 zweigen Seitenkanäle 32 von dem Zwischenraum 30 ab. Von Vorteil ist es, wenn über den Umfang der Spindel 12 verteilt mehrere Seitenkanäle 32 abzweigen, um eine möglichst gleichmäßige Zufuhr von Säuberungsmittel in den Bereich des Werkzeughalters 22 zu erreichen.

Die Seitenkanäle 32 besitzen jeweils eine Auslaßöffnung 34, die an der unteren Stirnfläche der Spindel 12, d.h. neben der Werkzeugaufnahme 20 münden. Die Auslaßöffnungen 34 sind so angeordnet, daß sie gegenüber der sogenannten Planfläche 36 des Werkzeughalters 22 liegen. Die Planfläche 36 ist für die exakte Positionierung des Werkzeughalters 22 in der Aufnahme 20 besonders wichtig, so daß durch diese Anordnung der Ausgangsöffnungen 34 eine besonders effektive Reinigungswirkung erreicht wird.

Mit der Bezugsziffer 38 ist ein hier nur gestrichelt angedeutetes Kühlmittelröhrchen bezeichnet, das in dem Werkzeughalter 22 in an sich bekannter Weise angeordnet ist. Das Kühlmittelröhrchen 38 schließt an seinem in der Darstellung in Fig. 1 oben liegenden Ende paßgenau an das Innenrohr 28 an.

Das Innenrohr 28 erstreckt sich in diesem Ausführungsbeispiel einstückig vom unteren Ende der Spindel 12 über den Bereich einer an sich bekannten Kupplung 40 bis zu einer zweifachen Dreheinführung 42. An seinem oberen Ende ist das Innenrohr 28 mit der Dreheinführung 42 verbunden. An einem ersten Anschluß 44 der Dreheinführung 42 ist eine Aerosolquelle 46 angeschlossen, über die ein Aerosol in Richtung eines Pfeils 48 in das Innenrohr 28 geleitet werden kann. An einem zweiten Anschluß 50 der Dreheinführung 42 ist eine Druckluftquelle 52 angeschlossen, über die Druckluft in Richtung eines Pfeils 54 in den zweiten Kanal 30 hinein gepumpt werden kann.

Bei der nachfolgenden Beschreibung der weiteren Figuren bezeichnen gleiche Bezugszeichen jeweils dieselben Elemente wie zuvor.

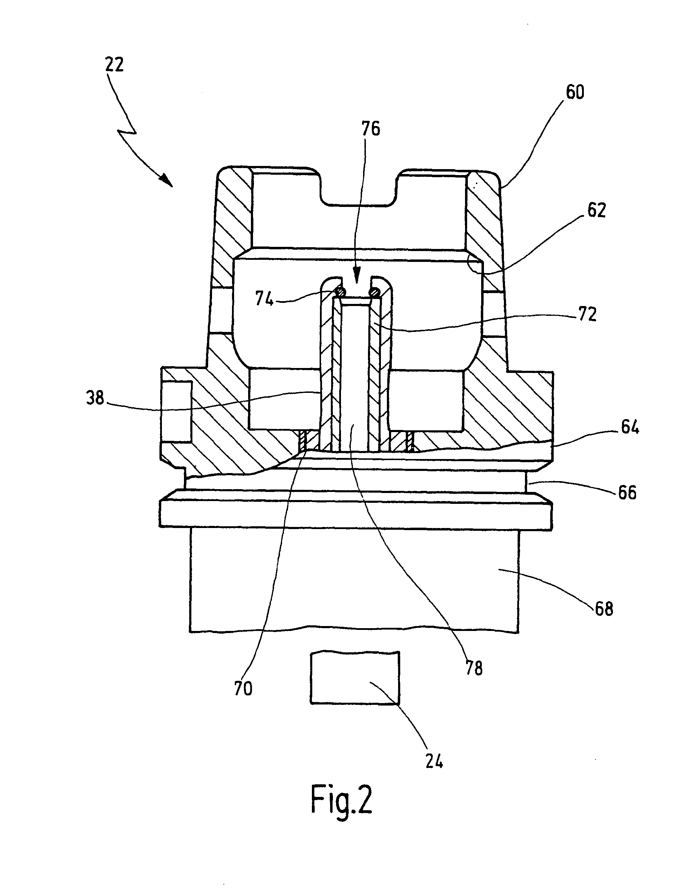

Fig. 2 zeigt eine teilweise geschnittene Ansicht des in der Werkzeugmaschine 10 verwendeten Werkzeughalters 22. Der Werkzeughalter 22 besitzt in an sich bekannter Weise einen Kegelhohlschaft 60, auf dessen Innenseite eine umlaufende Schulter 62 ausgebildet ist. An der,Schulter 62 greifen im eingespannten Zustand des Werkzeughalters 22 Spannzangen eines in der Spindel 12 angeordneten und nachfolgend näher beschriebenen Spannsystems an.

An den Kegelhohlschaft 60 schließt sich nach unten ein Bund 64 an, an dem etwas unterhalb eine umlaufende Ringnut 66 vorgesehen ist. Die Ringnut 66 dient beispielsweise als Greifnut für automatische Werkzeugwechselvorrichtungen. Unterhalb der Ringnut 66 schließt sich ein Halteschaft 68 an, an dem in an sich bekannter Weise Werkzeuge 24 befestigt werden.

Zentrisch in der Mitte des Kegelhohlschaftes 60 ist das Kühlmittelröhrchen 38 befestigt. Die Befestigung erfolgt hier mit einer Überwurfmutter 70. Im Inneren des Kühlmittelröhrchens ist bei dem hier dargestellten Ausführungsbeispiel ein rohrförmiger Inneneinsatz 72 angeordnet. Der Inneneinsatz 72 fixiert eine Ringdichtung 74, die unterhalb der Eingangsöffnung 76 des Kühlmittelröhrchens 38 vorgesehen ist. Der rohrförmige Inneneinsatz 72 bildet in dem Kühlmittelröhrchen 38 einen Kanal 78, der sich in nachfolgend näher dargestellter Weise an das Innenrohr 28 der Spindel 12 anschließt.

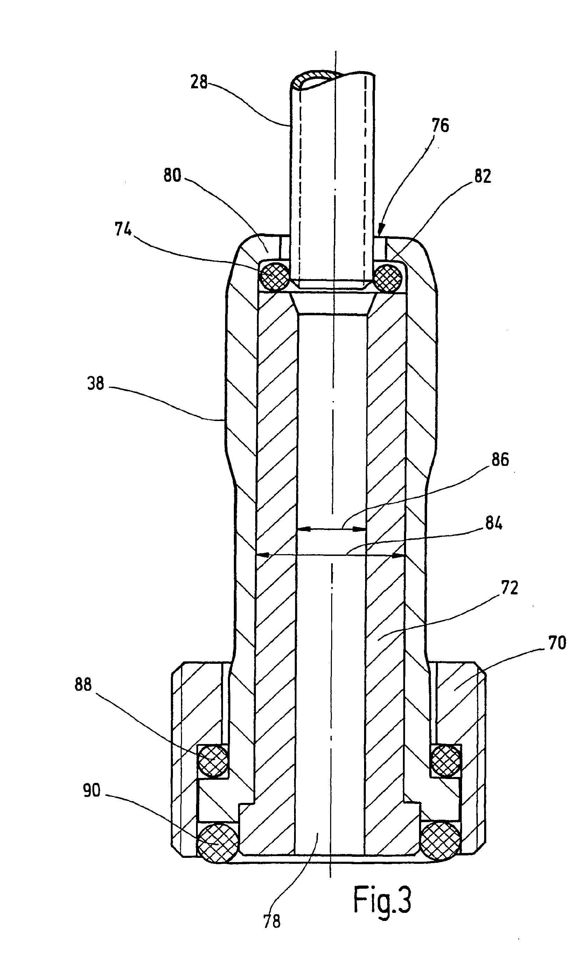

Wie man aus Fig. 3 erkennen kann, besitzt das Kühlmittelröhrchen 38 an seinem oberen Ende einen nach innen vorspringenden Rand 80, der die Eingangsöffnung 76 umgibt. Nach innen bildet der vorspringende Rand 80 eine Schulter 82. In Verbindung mit dem rohrförmigen Inneneinsatz 72 fixiert diese Schulter 82 die Ringdichtung 74 im Bereich der Eingangsöffnung 76.

Wie aus Fig. 3 weiter zu erkennen ist, wird der lichte Innendurchmesser des Kühlmittelröhrchens 38, der hier mit der Bezugsziffer 84 bezeichnet ist, durch den Inneneinsatz 72 verringert. Der Kanal 78 besitzt folglich einen verringerten Innendurchmesser, der in Fig. 3 mit der Bezugsziffer 86 bezeichnet ist. Der Innendurchmesser 86 entspricht in etwa dem Innendurchmesser des Innenrohrs 28, das in dem hier dargestellten Ausführungsbeispiel in die Eingangsöffnung 76 des Kühlmittelröhrchens 38 eingreift. Insgesamt wird damit ein in etwa gleichbleibend großer Kanal für das Aerosol bereitgestellt.

Der Vollständigkeit halber sind in Fig. 3 noch zwei weitere Ringdichtungen 88 und 90 eingezeichnet, mit denen das Kühlmittelröhrchen 38 in der Überwurfmutter 70 sowie der Inneneinsatz 72 gegenüber dem Kühlmittelröhrchen 38 abgedichtet werden.

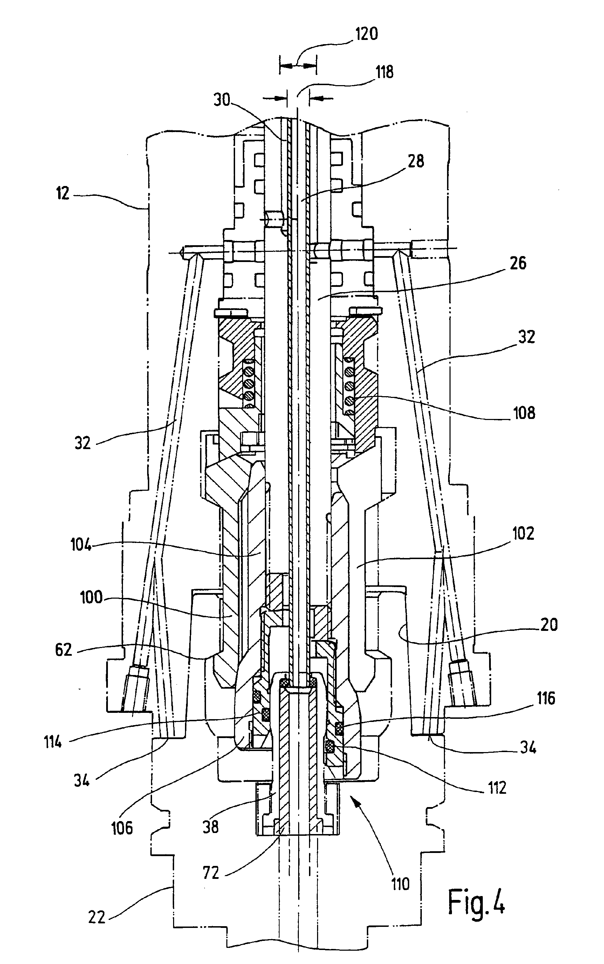

In Fig. 4 sind weitere Details der Spindel 12 in einer teilweise schematisierten Darstellung gezeigt. Aus Gründen der Übersichtlichkeit sind dabei nicht alle Schnittflächen schraffiert. Des weiteren zeigt die Darstellung in Fig. 4 zwei verschiedene Betriebsstellungen des an sich bekannten Spannsystems für den Werkzeughalter 22. Im linken Teil der Fig. 4 ist die Situation dargestellt, in der der Werkzeughalter 22 über eine Spannzange 100 in der Werkzeugaufnahme 20 eingespannt ist. Das untere Ende der Spannzange 100 greift dabei an der Schulter 62 im Inneren des Kegelhohlschaftes 60 an.

Im rechten Teil der Fig. 4 ist die Spannzange 102 demgegenüber im gelösten Zustand dargestellt. In dieser Situation kann der Werkzeughalter 22 aus der Werkzeugaufnahme 20 entnommen bzw. in diese eingesetzt werden.

Das an sich bekannte Spannsystem beinhaltet neben den beiden Spannzangen 100, 102 eine Spannstange 104, an deren unteren Ende ein Spannzapfen 106 ausgebildet ist. Die Spannstange 104 wird über einen Federmechanismus 108 nach unten gedrückt oder gegen den Federmechanismus 108 nach oben gezogen. Über den Spannzapfen 106 werden dabei die Spannzangen 100, 102 gegen die Schulter 62 gedrückt, oder sie geben die Schulter 62 frei.

Wie in Fig. 4 dargestellt ist, bildet die innen hohle Spannstange 104 die Ausgangsöffnung 110 des ersten Kanals 26. Das Kühlmittelröhrchen 38 greift in diese Ausgangsöffnung 110 ein, wie dies an sich von der eingangs beschriebenen Werkzeugmaschine bekannt ist. Zusätzlich greift bei dem hier bevorzugten Ausführungsbeispiel jedoch auch das Innenrohr 28 in die Eingangsöffnung 76 des Kühlmittelröhrchens 38. An seiner Außenseite ist das Kühlmittelröhrchen 38 über eine Ringdichtung 112 gegenüber der Spannstange 104 abgedichtet. Im vorliegenden Fall wird die Ringdichtung 112 von einem Einsatz 114 gehalten, der außerdem eine weitere Ringdichtung 116 trägt. Insgesamt wird durch diese Anordnung eine besonders sichere und wirksame Abdichtung des Aerosolkanals erreicht.

Der Vollständigkeit halber sind in Fig. 4 des weiteren noch der Außendurchmesser des Innenrohrs 28 (Bezugsziffer 118) sowie der Innendurchmesser des ersten Kanals 26 (Bezugsziffer 120) angedeutet. Durch den erkennbaren Größenunterschied wird der Zwischenraum 30 gebildet, der als zweiter Kanal für die Druckluft Verwendung findet.

## Patentansprüche

1. Werkzeugmaschine mit einer Spindel (12), die eine Werkzeugaufnahme (20) für einen wechselbaren Werkzeughalter (22) aufweist, der im Betrieb der Werkzeugmaschine (10) in die Werkzeugaufnahme (20) eingespannt ist und der zum Aufnehmen eines Kühl-Schmiermittels ein Kühlmittelröhrchen (38) aufweist, ferner mit einem im Inneren der Spindel (12) angeordneten ersten Kanal (26) mit einer Ausgangsöffnung (110), die innerhalb der Werkzeugaufnahme (20) mündet, wobei das Kühlmittelröhrchen (38) bei eingespanntem Werkzeughalter (22) in die Ausgangsöffnung (110) des ersten Kanals (26) eingreift, **dadurch gekennzeichnet, daß** der erste Kanal (26) ein durchgehendes Innenrohr (28) beinhaltet, dessen erstes Ende mit einer Aerosolquelle (46) verbunden ist und dessen zweites Ende zum paßgenauen Anschluß an das Kühlmittelröhrchen (38) ausgebildet ist.

2. Werkzeugmaschine nach Anspruch 1, **dadurch gekennzeichnet, daß** das Innenrohr (28) im eingespannten Zustand des Werkzeughalters (22) in eine Eingangsöffnung (76) des Kühlmittelröhrchens (38) eingreift.

3. werkzeugmaschine nach Anspruch 1 oder 2, **dadurch gekennzeichnet, daß** das Kühlmittelröhrchen (38) in dem ersten Kanal (26) über eine erste Ringdichtung (112, 116) abgedichtet ist.

4. Werkzeugmaschine nach Anspruch 3, **dadurch gekennzeichnet, daß** die erste Ringdichtung (112) das Kühlmittelröhrchen (38) an seiner Außenseite umgibt.

5. Werkzeugmaschine nach einem der Ansprüche 1 bis 4, **dadurch gekennzeichnet, daß** das Innenrohr (28) mit dem Kühlmittelröhrchen (38) über eine zweite Ringdichtung (74) verbindbar ist.

6. Werkzeugmaschine nach Anspruch 5, **dadurch gekennzeichnet, daß** die zweite Ringdichtung (74) im Inneren des Kühlmittelröhrchens (38) angeordnet ist.

7. Werkzeugmaschine nach Anspruch 5 oder 6, **dadurch gekennzeichnet, daß** das Kühlmittelröhrchen (38) einen rohrförmigen Inneneinsatz (72) aufweist, mit dessen Hilfe die zweite Ringdichtung (74) fixiert ist.

8. Werkzeugmaschine nach einem der Ansprüche 1 bis 7, **dadurch gekennzeichnet, daß** die Spindel (12) eine mit einer Innenbohrung versehene Spannstange (104) zum Festspannen des Werkzeughalters (22) besitzt, wobei die Innenbohrung der Spannstange die Ausgangsöffnung (110) des ersten Kanals (26) bildet.

9. Werkzeugmaschine nach einem der Ansprüche 1 bis 8, **dadurch gekennzeichnet, daß** die Spindel (12) ferner zumindest einen zweiten Kanal (30) aufweist, der mit einer Quelle (52) für ein Säuberungsmittel, insbesondere mit einer Druckluftquelle, verbunden ist.

10. Werkzeugmaschine nach einem der Ansprüche 1 bis 9, **dadurch gekennzeichnet, daß** das Innenrohr (28) zumindest streckenweise einen Außendurchmesser (118) aufweist, der um so viel kleiner ist als ein lichter Innendurchmesser (120) des ersten Kanals (26), daß ein lichter Zwischenraum (30) um das Innenrohr (28) verbleibt.

11. Werkzeugmaschine nach Anspruch 10, **dadurch gekennzeichnet, daß** im Bereich des lichten Zwischenraums (30) zumindest ein Seitenkanal (32) mit einer Auslaßöffnung (34) abzweigt, die an einem an der Stirnfläche der Spindel (12) angeordneten Abschnitt mündet.

12. Werkzeugmaschine nach Anspruch 11, **dadurch gekennzeichnet, daß** die Auslaßöffnung (34) an einem Abschnitt der Spindel (12) mündet, an dem der Werkzeughalter (22) in eingespanntem Zustand mit einer Planfläche (36) anliegt.

13. Werkzeugmaschine nach einem der Ansprüche 1 bis 12, mit einem Werkzeughalter (22) mit einem Außenkegel (60) zum Einspannen in die Werkzeugaufnahme (22) und mit einem Kühlmittelröhrchen (38) zum Aufnehmen eines Kühl-Schmiermittels, wobei das Kühlmittelröhrchen (38) an seinem in Richtung der Werkzeugaufnahme (22) zeigenden Ende zum paßgenauen Anschluß an ein in der Werkzeugaufnahme (22) mündendes Innenrohr (28) ausgebildet ist.

## Claims

1. Machine tool, having a spindle (12) which has a tool receptacle (20) for an interchangeable tool holder (22) which is chucked into the tool receptacle (20) during operation of the machine tool (10) and which has a coolant tube (38) for receiving a cooling lubricant, and having a first passage (26) which is arranged in the interior of the spindle (12) and has an outlet opening (110) which opens out inside the tool receptacle (20), the coolant tube (38), when a tool holder (22) is chucked, engaging in the outlet opening (110) of the first passage (26), **characterized in that** the first passage (26) comprises a continuous inner tube (28), the first end of which is connected to an aerosol source (46) and the second end of which is designed for the accurately fitting connection to the coolant tube (38).

2. Machine tool according to Claim 1, **characterized in that** the inner tube (28), in the chucked state of the tool holder (22), engages into an inlet opening (76) of the coolant tube (38).

3. Machine tool according to Claim 1 or 2, **characterized in that** the coolant tube (38) is sealed off in the first passage (26) via a first annular seal (112, 116).

4. Machine tool according to Claim 3, **characterized in that** the first annular seal (112) surrounds the coolant tube (38) on its outside.

5. Machine tool according to anyone of Claims 1 to 4, **characterized in that** the inner tube (28) is connectable to the coolant tube (38) via a second annular seal (74).

6. Machine tool according to Claim 5, **characterized in that** the second annular seal (74) is arranged in the interior of the coolant tube (38).

7. Machine tool according to Claim 5 or 6, **characterized in that** the coolant tube (38) has a tubular inner insert (72), by means of which the second annular seal (74) is fixed.

8. Machine tool according to anyone of Claims 1 to 7, **characterized in that** the spindle (12) has a chucking rod (104) provided with an inner bore and intended for chucking the tool holder (22) in position, the inner bore of the chucking rod forming the outlet opening (110) of the first passage (26).

9. Machine tool according to anyone of Claims 1 to 8, **characterized in that** the spindle (12) further has at least one second passage (30), which is connected to a source (52) for a cleaning agent, in particular to a compressed-air source.

10. Machine tool according to anyone of Claims 1 to 9, **characterized in that** the inner tube (28), at least in sections, has an outside diameter (118) which is smaller than a clear inside diameter (120) of the first passage (26) to such an extent that a clear intermediate space (30) remains around the inner tube (28).

11. Machine tool according to Claim 10, **characterized in that** at least one side passage (32) having an outlet opening (34) which opens out at a section arranged at the end face of the spindle (12) branches off in the region of the clear intermediate space (30).

12. Machine tool according to Claim 11, **characterized in that** the outlet opening (34) opens out at a section of the spindle (12) against which the tool holder (22) bears with a plane surface (36) in the chucked state.

13. Machine tool according to anyone of Claims 1 to 12, having a tool holder (22) with an external taper (60) for being chucked into the tool receptacle (22) and with a coolant tube (38) for receiving a cooling lubricant, whereby the coolant tube (38), at its end pointing in the direction of the tool receptacle (22), is designed for the accurately fitting connection to an inner tube (28) opening out in the tool receptacle (22).

## Revendications

1. Machine-outil pourvue d'une broche (12) qui présente un logement d'outils (20) pour un porte-outil (22) remplaçable qui est serré, lorsque la machine-outil (10) fonctionne, dans le logement d'outils (20) et qui présente pour la réception d'un lubrifiant froid un petit tube de réfrigérant (38), de plus d'un premier canal (26) disposé à l'intérieur de la broche (12) avec un orifice de sortie (110) qui débouche au sein du logement d'outils (20), le petit tube de réfrigérant (38) s'engageant, lorsque le porte-outil (22) est serré, dans l'orifice de sortie (110) du premier canal (26), **caractérisée en ce que** le premier canal (26) contient un tube interne traversant (28), dont la première extrémité est reliée à une source d'aérosol (46) et dont la seconde extrémité est réalisée en vue du raccordement en ajustement précis au petit tube de réfrigérant (38).

2. Machine-outil selon la revendication 1,
**caractérisée en ce que** le tube interne (28) s'engage à l'état serré du porte-outil (22) dans un orifice d'entrée (76) du petit tube de réfrigérant (38).

3. Machine-outil selon la revendication 1 ou 2, **caractérisée en ce que** le petit tube de réfrigérant (38) est rendu étanche dans le premier canal (26) par l'intermédiaire d'une première garniture annulaire (112, 116).

4. Machine-outil selon la revendication 3, **caractérisée en ce que** la première garniture annulaire (112) entoure le petit tube de réfrigérant (38) sur son côté extérieur.

5. Machine-outil selon l'une quelconque des revendications 1 à 4, **caractérisée en ce que** le tube interne (28) peut être relié au petit tube de réfrigérant (38) par le biais d'une seconde garniture annulaire (74).

6. Machine-outil selon la revendication 5, **caractérisée en ce que** la seconde garniture annulaire (74) est disposée à l'intérieur du petit tube de réfrigérant (38).

7. Machine-outil selon la revendication 5 ou 6, **caractérisée en ce que** le petit tube de réfrigérant (38) présente un élément d'insertion interne (72) tubulaire, à l'aide duquel la seconde garniture annulaire (74) est fixée.

8. Machine-outil selon l'une quelconque des revendications 1 à 7, **caractérisée en ce que** la broche (12) possède un tendeur (104) pourvu d'un perçage intérieur pour serrer le porte-outil (22), le perçage intérieur du tendeur formant l'orifice de sortie (110) du premier canal (26).

9. Machine-outil selon l'une quelconque des revendications 1 à 8, **caractérisée en ce que** la broche (12) présente de plus au moins un deuxième canal (30) qui est relié à une source (52) pour un moyen de nettoyage, notamment à une source d'air comprimé.

10. Machine-outil selon l'une quelconque des revendications 1 à 9, **caractérisée en ce que** le tube intérieur (28) présente au moins sur un tronçon un diamètre extérieur (118) qui est d'autant plus petit qu'un diamètre intérieur (120) du premier canal (26) qu'un espace intermédiaire (30) intérieur reste autour du tube intérieur (28).

11. Machine-outil selon la revendication 10, **caractérisée en ce que** dans la zone de l'espace intermédiaire (30) intérieur, au moins un canal latéral (32) bifurque à l'aide d'un orifice de sortie (34) qui débouche sur une section disposée sur la face frontale de la broche (12).

12. Machine-outil selon la revendication 11, **caractérisée en ce que** l'orifice de sortie (34) débouche sur une section de la broche (12), sur laquelle le porte-outil (22) repose à l'état serré par le biais d'une surface plane (36).

13. Machine-outil selon l'une quelconque des revendications 1 à 12, pourvue d'un porte-outil (22) avec un cône extérieur (60) en vue du serrage dans le logement d'outils (22) et avec un petit tube de réfrigérant (38) pour recevoir un lubrifiant froid, le petit tube de réfrigérant (38) étant réalisé sur son extrémité dirigée vers le logement d'outils (22) en vue du raccordement en ajustement précis au tube interne (28) débouchant dans le logement d'outils (22).
